Europäisches Patentamt

European Patent Office

Office européen des brevets

(11) Veröffentlichungsnummer : **0 063 262**
**B1**

(12) **EUROPÄISCHE PATENTSCHRIFT**

(45) Veröffentlichungstag der Patentschrift :
07.08.85

(51) Int. Cl.⁴ : **G 01 N 21/90**

(21) Anmeldenummer : 82102606.9

(22) Anmeldetag : 27.03.82

(54) Prüfvorrichtung zur Feststellung von Mündungsfehlern von Glasgegenständen.

(30) Priorität : 09.04.81 DE 3114285

(43) Veröffentlichungstag der Anmeldung :
27.10.82 Patentblatt 82/43

(45) Bekanntmachung des Hinweises auf die Patenterteilung : 07.08.85 Patentblatt 85/32

(84) Benannte Vertragsstaaten :
AT BE CH DE FR GB IT LI LU NL SE

(56) Entgegenhaltungen :
DE-A- 2 718 802
US-A- 4 026 414

(73) Patentinhaber : Fa. HERMANN HEYE
Allee
D-3063 Obernkirchen (DE)

(72) Erfinder : Fischer, Knut
Bergmannsweg 20
D-3262 Auetal 5 (DE)

(74) Vertreter : Kosel, Peter, Dipl.-Ing. et al
Patentanwälte Dipl.-Inge. Röse, Kosel & Sobisch
Odastrasse 4a Postfach 129
D-3353 Bad Gandersheim 1 (DE)

EP 0 063 262 B1

**Beschreibung**

Die Erfindung betrifft eine Prüfvorrichtung gemäß dem Oberbegriff des Anspruchs 1.

Bei einer bekannten, in einer Flaschenspülanlage eingesetzten Vorrichtung dieser Art (DE-Offenlegungsschrift 27 18 802) sind die Empfangselemente in einer zu der optischen Achse des Objektivs rechtwinkligen Ebene angeordnet. Vor Inbetriebnahme kann die Anordnung anhand einer Probeflasche einjustiert werden. Dazu ist ein Umlenkspiegel in den Strahlengang zwischen dem Objektiv und den Empfangselementen bewegbar. Der Umlenkspiegel lenkt das Bild der Mündung quer zur optischen Achse des Objektivs auf eine besondere Justiermattscheibe, deren Ebene der Ebene der Empfangselemente entsprechen muß. Diese Justiereinrichtung ist aufwendig und gestattet dennoch nicht eine Justierung mit ausreichender Genauigkeit. Betriebsbereitschaft der Prüfvorrichtung besteht erst, wenn der Umlenkspiegel wieder aus dem Strahlengang entfernt ist. Die ringförmige Lichtquelle befindet sich etwa in einer Ebene mit dem Objektiv. Diese Anordnung eignet sich nicht für Prüfvorrichtungen am sog. « heißen Ende » von Glasformmaschinen, wo die gerade fertiggestellten Hohlglasgegenstände noch sehr hohe Wärmestrahlung aussenden. Ferner ist die Beleuchtungsintensität und damit die Empfindlichkeit insbesondere für die Erkennung verhältnismäßig kleiner Fehler unzureichend. Wegen der unerläßlichen Stromzuführung muß die Lichtquelle am Umfang unterbrochen sein, wodurch eine über den Umfang gleichmäßige Beleuchtung ausgeschlossen ist. Auch dadurch ist die Empfindlichkeit der bekannten Vorrichtung begrenzt.

Aus der US-Patentschrift 4 026 414 ist eine Prüfvorrichtung an sich bekannt, deren zentrale Lichtquelle einen Lichtkegel durch eine mittige Durchbrechung einer ringförmigen Platte auf die Mündung sendet. Von der Mündung wird Licht auf die an der Unterseite der Platte angebrachten Empfangselemente reflektiert.

Bei einer weiteren bekannten Prüfvorrichtung (DE-Offenlegungsschrift 29 16 361) ist die Lichtquelle durch auf einem Kreis um einen Bildtubus herum koaxial mit dem in einer Meßposition befindlichen Prüfling angeordnete Blitzlampen gebildet. In jedem Prüfvorgang werden, gesteuert durch eine durch den Prüfling dunkelgetastete Startlichtschranke, alle Blitzlampen gleichzeitig und nur einmal angesteuert. Das Blitzlicht tritt durch eine außen an dem Bildtubus anliegende ringförmige Streuscheibe und fällt zum Teil auf die obere Begrenzungsfläche einer Mündung des Prüflings, von wo ein Teil in das Innere des Bildtubus reflektiert und durch eine am oberen Ende des Bildtubus anschließende, nach dem Zeilenrasterverfahren arbeitende Fernsehkamera aufgenommen wird. Auf einer lichtempfindlichen Schicht der Aufnahmeröhre der Fernsehkamera wird dadurch ein der oberen Begrenzungsfläche der Mündung entsprechendes Ladungsbild erzeugt, gespeichert und später in einer Auswerteschaltung ausgewertet. Bis dahin muß der Abtaststrahl der Aufnahmeröhre gesperrt werden, um ein vorzeitiges Löschen des Ladungsbildes zu verhindern. Aus beim zeilenweisen Abtasten des Ladungsbildes entstehenden Impulspaaren werden Sehnenlängensignale gebildet und mit Sollwerten verglichen. Bei Abweichung um mehr als einen vorgegebenen Betrag wird ein Fehlersignal abgegeben und zur Betätigung des Auswerfers verwendet. Die Geräte zur Erzeugung, Sichtbarmachung und Auswertung dieser Videosignale sind verhältnismäßig anspruchsvoll und kompliziert und nur von besonders geschultem Personal zu warten und zu reparieren, das in einer Glashütte, insbesondere in Entwicklungsländern, normalerweise nicht verfügbar ist. Derartiges Personal ist ferner seltener als das herkömmliche Personal in den Glashütten bereit, die unerläßlichen Spät- und Nachtschichten zu übernehmen. Mit der bekannten Prüfvorrichtung kann nur eine fehlerhafte Dichtfläche der Mündung festgestellt werden.

Aus dem Prospekt « Kombi-Inspektor Typ 64 » 3000 d.9/77 der Fa. Herman Kronseder, Maschinenfabrik, D-8402 Neutraubling, ist u.a. eine Bodeninspektion für Flaschen an sich bekannt. Dabei wird der Boden mit einer Beleuchtungsvorrichtung von unten durchstrahlt. Strahlen treten durch die Mündung der Flasche und eine nachgeschaltete Optik in einen Lichtteiler ein, der einen Teil dieser Strahlen rechtwinklig ablenkt und durch eine Optik auf ein sechseckiges flächiges Fotodioden-Array für die Flaschenbodenmitte ablenkt.

Der Erfindung liegt die Aufgabe zugrunde, die Prüfvorrichtung im Aufbau und für Wartung und Reparatur zu vereinfachen und auch für nicht besonders geschultes Personal verständlich und bedienbar zu machen. Der Betriebsaufwand soll gesenkt werden. Es sollen außer fehlerhaften Dichtflächen, z. B. aufgrund abgesplitterten Glases und nicht ausgepreßter oder nicht ausgeblasener Mündungen, auch andere Fehler an der Mündung erkannt werden, wie z. B. Taumelfehler (paralleler und/oder winkliger und/oder windschiefer Versatz der Längsachsen der Mündung und des Bodens gegenüber einander), starke Sattelbildung, Ovalität, starke Verschmutzung durch Formenschmiere, gegenüber der Waagerechten geneigte Mündungen, Pickel, überpreßte Mündungen und der als « line over finisch » bekannte Fehler. Die Erkennbarkeit der Fehler soll grundsätzlich unabhängig von dem Typ der Mündung gewährleistet sein.

Diese Aufgabe ist durch die im Anspruch 1 angegebenen Mittel gelöst. Die Ablenkung des Mündungsbildes durch den Spiegel erleichtert und verbessert die ggf. visuelle Justierung der Prüfvorrichtung ganz erheblich. Über die Größe und die Anzahl der auf einem Kreis von gegebenem Durchmesser angeordneten Empfangselemente läßt sich jede gewünschte Empfindlichkeit bei der Fehlererkennung erreichen. Auf die Empfindlichkeit der Fehlererkennung hat ferner die Justierung des Mündungsbildes relativ zu den Empfangselementen einen Einfluß. Als Lampe kann z. B. eine handelsübliche H3-Halogenlampe verwendet werden, wie sie bei gewissen Autoscheinwerfern eingesetzt wird. Solche Lampen sind bei Bedarf besonders leicht auszutauschen. Als Lichtquelle ist also bei der Erfindung eine Blitzlichteinrichtung nicht erforderlich. Die wenigstens eine Kollektorlinse und die Kondensorlinse können mit der Lampe auf einfache und übersichtliche Weise in einem Beleuchtungstubus gefaßt sein. Die Anordnung des Spiegels zwischen den konvexen Linsenflächen ist besonders raumsparend und erleichtert die Strahlenführung des Systems.

Die Maßnahmen des Anspruchs 2 dienen zum Einrichten der Vorrichtung für unterschiedliche Prüfaufgaben an verschiedenen Mündungsdurchmessern. Als Objektiv wird zweckmäßigerweise ein aus zwei miteinander verkitteten Linsen gefertigter Achromat verwendet.

Die Merkmale des Anspruchs 3 erleichtern die Montage und schirmen das abbildende optische System gegen unerwünschtes Streulicht ab.

Auch die Merkmale des Anspruchs 4 dienen der Justierung der Prüfvorrichtung, insbesondere bei der Umstellung auf unterschiedliche Typen von Hohlglasgegenständen und bei der Umstellung auf die Feststellung unterschiedlicher Fehlertypen, z. B. von fehlerhafter Dichtfläche auf Taumelfehler.

Die Merkmale des Anspruchs 5 bieten eine Bedienungsvereinfachung insofern, als die Empfangselemente auch während der Justierung der Prüfvorrichtung an ihrem Platz bleiben können.

Alternativ lassen sich gemäß Anspruch 6 der Empfänger und eine Mattscheibe, z. B. mittels eines Schiebers, für Justierung und nachfolgenden Prüfbetrieb austauschen.

Die Merkmale des Anspruchs 7 führen zu einer besonders einfachen, verzerrungsfreien und kompakten Ausbildung. Der Bildtubus kann z. B. mit der Durchbrechung der Kondensorlinse verklebt sein.

Die Merkmale des Anspruchs 8 gestatten die besonders sichere und einfache Erkennung von Taumelfehlern, wobei der anfänglich justierte radiale Abstand zwischen dem Mündungsbild und den Empfangselementen einen Einfluß auf die Toleranzvorgabe der Taumelfehlererkennung hat.

Gemäß Anspruch 9 ist eine sichere Erkennung fehlerhafter Dichtflächen gewährleistet.

Die Auswerteschaltung gemäß Anspruch 10 ist vergleichsweise einfach und gestattet im Gegensatz zu dem eingangs diskutierten Stand der Technik die parallele Auswertung der Ausgänge sämtlicher Empfangselemente. Je nach der Art des Verknüpfungsglieds lassen sich unterschiedliche Fehlertypen, z. B. fehlerhafte Dichtfläche oder Taumelfehler, durch einfache Umprogrammierung erkennen.

Die Merkmale des Anspruchs 11 gestatten insbesondere bei der Justierung der Prüfvorrichtung eine optische Überprüfung der räumlichen Lage und Anzeige von Fehlern.

Die Merkmale der Ansprüche 12 und 13 offenbaren jeweils ein besonderes Verknüpfungsglied für die Prüfung auf einen bestimmten Fehlertyp. Die Verknüpfungsglieder dieser unterschiedlichen Typen können z. B. jeweils auf einer Steckkarte angeordnet und auf diese Weise bei Umprogrammierung leicht austauschbar sein.

Die Erfindung wird nachfolgend anhand der in den Zeichnungen dargestellten Ausführungsbeispiele näher erläutert. Es zeigen :

Figur 1 einen Längsschnitt durch eine Prüfvorrichtung,

Figur 2 eine Seitenansicht eines Teils einer anderen Prüfvorrichtung,

Figur 3 das Schaltschema einer elektronischen Auswerteschaltung für die Prüfvorrichtungen und

Figuren 4 und 5 jeweils ein unterschiedliches Verknüpfungsglied für unterschiedliche Prüfungstypen.

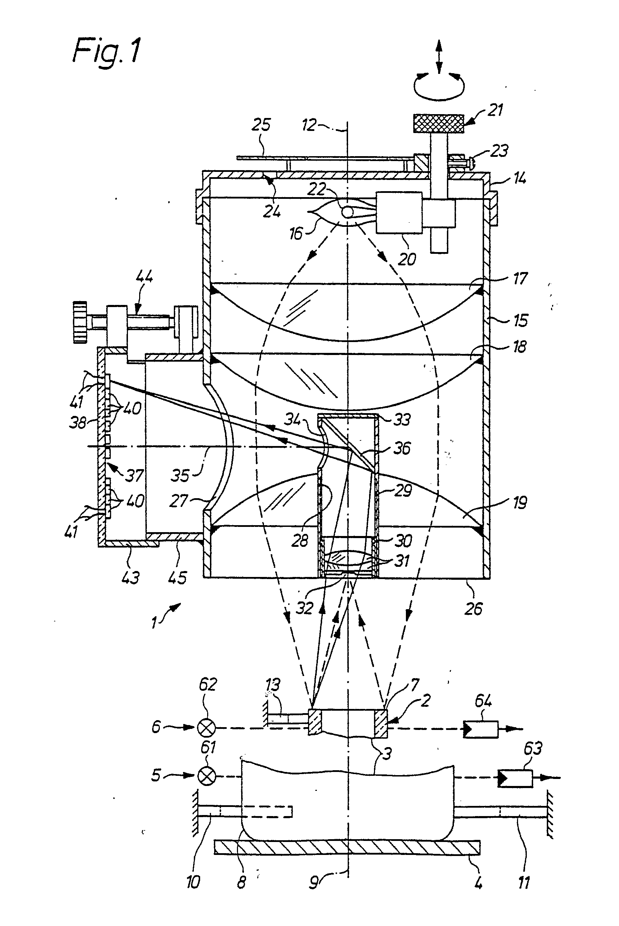

Fig. 1 zeigt eine Prüfvorrichtung 1 zur Feststellung von nicht tolerierbaren Fehlern an einer Mündung 2 eines durch einen Hohlglasgegenstand, in diesem Fall eine Flasche, gebildeten Prüflings 3. Der Prüfling 3 ist auf eine nur schematisch angedeutete, sich rechtwinklig zu dem Zeichnungsblatt bewegende Transportkette 4 aufgesetzt, die sich vorzugsweise kontinuierlich bewegt. Die Prüflinge 3 stehen auf der Transportkette 4 in der Bewegungsrichtung grundsätzlich hintereinander. Der Abstand aufeinanderfolgender Prüflinge 3 voneinander ist insofern unkritisch, als jeder Prüfling 3 seinen Prüfvorgang über eine Startlichtschranke 5 oder 6 selbst auslöst.

Nachfolgend wird die Erfindung für zwei charakteristische Fehlertypen, nämlich den Taumelfehler und die fehlerhafte Dichtfläche 7 der Mündung 2, beispielsweise beschrieben. Mit « Dichtfläche » wird unabhängig von dem jeweiligen Typ der Mündung 2 die obere Begrenzungsfläche der Mündung 2 bezeichnet.

Bei der Prüfung auf Taumelfehler wird festgestellt, ob die Exzentrizität der Mündung 2 gegenüber einer Längsachse 9 eines Bodens 8 des Prüflings 3 innerhalb oder außerhalb vorgegebener Toleranzen liegt. Dazu wird der Prüfling 3 auf der Transportkette 4 zunächst durch eine Zentrierschiene 10 auf der einen Seite der Transportkette 4 und nachfolgend durch eine Zentrierschiene 11 auf der anderen Seite der Transportkette 4 quer zu der Transportrichtung in die in Fig. 1 gezeigte Querlage zentriert. Die Zentrierschienen 10, 11 sind jeweils fest an einem nicht weiter gezeichneten Gestell der Prüfvorrichtung angebracht und wirken mit dem Bereich des Bodens 8 des Prüflings 3 zusammen.

Für die Feststellung des Taumelfehlers findet eine weitere Zentrierung des Prüflings 3 in der in Fig. 1 gezeigten Prüfposition nicht statt, und der Prüfvorgang wird durch die untere Startlichtschranke 5 ausgelöst. In dieser Prüfposition, in der die Startlichtschranke 5 durch den Prüfling 3 gerade dunkelgetastet worden ist, fluchtet die Längsachse 9 des Bodens 8 mit einer Längsachse 12 der Prüfvorrichtung 1.

Soll dagegen festgestellt werden, ob sich in oder an der Dichtfläche 7 nicht tolerierbare Fehler befinden, erfolgt an dem herannahenden Prüfling 3 zunächst die zuvor beschriebene Querzentrierung durch die vor der Prüfposition angeordneten Zentrierschienen 10, 11 als Grobzentrierung, danach aber zusätzlich eine Feinzentrierung durch eine gemäß Fig. 1 an der Mündung 2 angreifende Feinzentrierschiene 13. In diesem Fall wird statt der Startlichtschranke 5 ausschließlich die Startlichtschranke 6 benutzt, die mit der Mündung 2 zusammenwirkt.

In der Prüfvorrichtung 1 sind in einem durch einen Deckel 14 verschließbaren Beleuchtungstubus 15 eine Lampe 16, Kollektorlinsen 17 und 18 und eine Kondensorlinse 19 untergebracht. Die Lampe 16 sitzt in einer Fassung 20, die über eine an dem Deckel 14 gehaltene Einstellvorrichtung 21 in zwei Richtungen derart zentrierbar ist, daß schließlich eine Wendel 22 der Lampe 16 in der Längsachse 12 der Prüfvorrichtung 1 liegt. Zur Beeinflussung der Ausleuchtung der Mündung 2 kann die Wendel 22 mittels der Einstellvorrichtung 21 auch in Richtung der Längsachse 12 eingestellt und durch eine Feststellschraube 23 gesichert werden.

In dem Deckel 14 sind, über den Umfang verteilt, eine Anzahl Lüftungsbohrungen 24 vorgesehen, oberhalb derer an dem Deckel 14 ein Abschirmblech 25 befestigt ist.

Der Beleuchtungstubus 15 weist eine untere Öffnung 26 und eine seitliche Öffnung 27 auf.

Die Kondensorlinse 19 ist mit einer mittigen Durchbrechung 28 versehen, in der ein mittlerer Teil eines Bildtubus 29 eingeklebt ist. Der Bildtubus 29 weist ein Innengewinde auf, in das ein Fassungsring 30 für ein Objektiv 31 über Schlüsselkerben 32 in die gewünschte axiale Position einschraubbar ist. Das Objektiv 31 ist ein aus zwei miteinander verkitteten Linsen gebildeter Achromat.

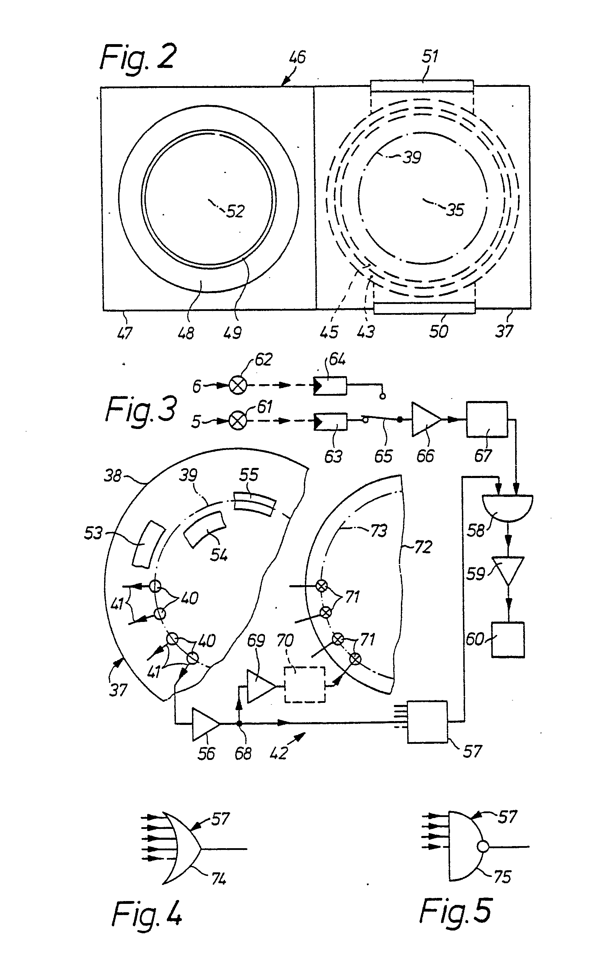

Der Bildtubus 29 ist oben durch einen Deckel 33 verschlossen und weist angrenzend an den Deckel 33 eine seitliche Öffnung 34 auf, die längs einer Projektionsachse 35 mit der seitlichen Öffnung 27 des Beleuchtungstubus 15 fluchtet. Im Schnittpunkt der Projektionsachse 35 mit der Längsachse 12 befindet sich das Zentrum eines in dem Bildtubus 29 festgelegten Spiegels 36, der das von dem Objektiv 31 entworfene Bild durch die seitlichen Öffnungen 34 und 27 hindurch auf einen Fotoempfänger 37 projiziert. Der Fotoempfänger weist eine als Mattscheibe ausgebildete Trägerplatte 38 auf, auf deren dem Spiegel 36 zugewandter Seite eine Anzahl auf einem Kreis 39 (Fig. 2 und 3) angeordnete Empfangselemente 40 befestigt sind. Der Kreis 39 liegt in einer zu der Projektionsachse 35 rechtwinkligen Ebene. Jedes Empfangselement 40 ist über eine Leitung 41 mit einer elektronischen Auswertschaltung 42 (Fig. 3) verbunden.

Der Fotoempfänger 37 ist an einem Ring 43 befestigt, der mittels einer Einstellvorrichtung 44 längs der Projektionsachse 35 relativ zu einem an dem Beleuchtungstubus 15 befestigten Stutzen 45 einstellbar ist.

Bei dem Ausführungsbeispiel gemäß Fig. 2 ist der Fotoempfänger 37 Bestandteil eines Schiebers 46, in dessen an den Fotoempfänger 37 angrenzenden Abschnitt 47 eine kreisförmige Mattscheibe 48 eingesetzt ist. Die Mattscheibe 48 trägt eine Doppelkreismarkierung 49, deren Mittenkreis dem Kreis 39 der Empfangselemente 40 entspricht. Auf der Mattscheibe 48 können auch andere Markierungen vorgesehen sein, die zur Einstellung der Prüfvorrichtung 1 dienen. Der Schieber 46 ist in Führungen 50 und 51 seitlich verschiebbar, die an dem Ring 43 befestigt sind. Sonstige Einzelheiten der Prüfvorrichtung 1 sind zur Vereinfachung in Fig. 2 fortgelassen.

Zur Einstellung wird der Schieber 46 in Fig. 2 nach rechts verschoben, bis ein Zentrum 52 der Mattscheibe 48 in der Projektionsachse 35 liegt. Dann wird ein Musterhohlglasgegenstand mit allenfalls tolerierbaren Mündungsfehlern auf der ruhenden Transportkette 4 zurechtgerückt, bis das Bild der Mündung 2 auf der Mattscheibe 48 in die gewünschte relative Lage zu der Doppelkreismarkierung 49 gebracht ist. Danach werden die Zentrierschienen 10, 11, 13 und die Startlichtschranke 5 oder 6 justiert. Bei Bedarf kann auch die gesamte Prüfvorrichtung 1 in Richtung ihrer Längsachse 12 relativ zu der Transportkette 4 bewegt werden. Ist die Einstellung des Bildes der Mündung 2 auf der Mattscheibe 48 abgeschlossen, wird der Schieber 46 in die in Fig. 2 gezeigte Prüfstellung geschoben, in der das Zentrum des Kreises 39 auf der Projektionsachse 35 liegt.

In Fig. 3 ist für die Taumelfehlerprüfung ein Bild 53 der Mündung 2 außerhalb und alternativ ein anderes Bild 54 der Mündung 2 innerhalb und jeweils in radialem Abstand von dem Kreis 39 angeordnet. Dieser radiale Abstand definiert jeweils eine Toleranzzone für die Feststellung eines nicht tolerierbaren Fehlers. Sobald sich das Bild 53 oder 54 unter Verminderung der radialen Toleranzzone den Empfangselementen 40 genügend weit genähert hat, wird wenigstens ein Empfangselement 40 beleuchtet und gibt über seine Leitung 41 ein Fehlersignal in die Auswerteschaltung 42.

Bei der Prüfung auf fehlerhafte Dichtfläche 7 liegt gemäß Fig. 3 ein Bild 55 der allenfalls tolerierbare Fehler enthaltenden Dichtfläche 7 unmittelbar auf dem Kreis 39, so daß sämtliche Empfangselemente 40 beleuchtet sind. Besitzt eine Mündung dagegen in der Dichtfläche 7 nicht tolerierbare Fehler, äußerst sich dies darin, daß wenigstens ein Empfangselement 40 durch das Bild 55 nicht beleuchtet ist. Auch diese Fehlerinformation wird über die zugehörige Leitung 41 in die Auswerteschaltung 42 gegeben.

In der Auswerteschaltung 42 ist jede Leitung 41 über einen Vorverstärker 56 mit einem gesonderten Eingang eines Verknüpfungsglieds 57 verbunden, dessen Ausgang über ein UND-Glied 58 und einen Endverstärker 59 mit einem Auswerfer 60 verbunden ist.

Die Startlichtschranken 5, 6 weisen jeweils eine Lichtquelle 61 und 62 und einen Empfänger 63 und 64 auf, die über einen Wahlschalter 65 wahlweise über einen Verstärker 66 und eine erste monostabile Kippschaltung 67 mit einem weiteren Eingang des UND-Glieds 58 verbunden sind. ·

Ein Punkt 68 zwischen jedem Vorverstärker 56 und dem zugehörigen Eingang des Verknüpfungsglieds 57 ist über einen Nachverstärker 69 und gegebenenfalls über eine nachgeschaltete zweite monostabile Kippschaltung 70 mit einer Signallampe 71 verbunden. Die Signallampen 71 sind auf einer Schautafel 72 in der gleichen Reihenfolge wie die zugehörigen Empfangselemente 40 auf einem Kreis 73 angeordnet.

Gemäß Fig. 4 ist das Verknüpfungsglied 57 als ODER-Glied 74 ausgebildet und dient der Taumelfehlerprüfung.

Das Verknüpfungsglied 57 gemäß Fig. 5 stellt ein NAND-Glied 75 dar und wird bei der Prüfung auf fehlerhafte Dichtfläche 7 eingesetzt.

**Patentansprüche**

1. Prüfvorrichtung (1) zur Feststellung von nicht tolerierbaren Fehlern einer Mündung (2) von sich entlang einer Bahn bewegenden Hohlglasgegenständen (3), bei der die Mündung (2) durch eine oberhalb der Mündung (2) angordnete Lichtquelle (16) beleuchtet und ein Bild (53, 54, 55) der Mündung (2) durch ein Objektiv (31) und durch einen oberhalb der Mündung (2) angeordneten Spiegel (36) quer zu einer zumindest annähernd senkrechten Längsachse (12) der Prüfvorrichtung (1) auf eine zur Projektionsrichtung (35) rechtwinklige Ebene projiziert wird, und bei der ferner ein über eine elektronische Auswerteschaltung (42) mit einem Auswerfer (60) verbundener Fotoempfänger (37) mit auf einem Kreis (39) angeordneten Empfangselementen (40) vorgesehen ist, dadurch gekennzeichnet, daß die Empfangselemente (40) des Fotoempfängers (37) in der zur Projektionsrichtung (35) des Spiegels (36) rechtwinkligen Ebene angeordnet sind, und daß die Lichtquelle als entlang der Längsachse (12) verschiebbare und in Bezug auf diese Längsachse zentrierbare Lampe (16) ausgebildet ist, der wenigstens eine Kollektorlinse (17 ; 18) und eine Kondensorlinse (19) nachgeordnet sind, und daß die Kondensorlinse (19) eine mittige Durchbrechung (28) aufweist, durch die hindurch das Bild der Mündung (2) über den zwischen der Kondensorlinse (19) und der der Kondensorlinse (19) benachbarten Kollektorlinse (18) angeordneten Spiegel (36) auf den Fotoempfänger (37) projiziert wird.

2. Prüfvorrichtung nach Anspruch 1, dadurch gekennzeichnet, daß das Objektiv (31) relativ zu dem Spiegel (36) einstellbar ist.

3. Prüfvorrichtung nach Anspruch 2, dadurch gekennzeichnet, daß der Spiegel (36) und das Objektiv (31) in einem gemeinsamen Bildtubus (29) untergebracht sind.

4. Prüfvorrichtung nach einem der Ansprüche 1 bis 3, dadurch gekennzeichnet, daß der Fotoempfänger (37) längs der Projektionsrichtung (35) relativ zu dem Spiegel (36) einstellbar ist.

5. Prüfvorrichtung nach einem der Ansprüche 1 bis 4, dadurch gekennzeichnet, daß die Empfangselemente (40) auf einer als Mattscheibe ausgebildeten Trägerplatte (38) angeordnet sind.

6. Prüfvorrichtung nach einem der Ansprüche 1 bis 4, dadurch gekennzeichnet, daß der Fotoempfänger (37) gegen eine Mattscheibe (48) austauschbar ist.

7. Prüfvorrichtung nach einem der Ansprüche 3 bis 6, dadurch gekennzeichnet, daß sich in die mittige Durch brechung (28) der Kondensorlinse (19) der Bildtubus (29) erstreckt.

8. Prüfvorrichtung nach einem der Ansprüche 1 bis 7, dadurch gekennzeichnet, daß für die Taumelfehlerprüfung der Fotoempfanger (37) radial außerhalb oder innerhalb der Empfangselemente (40) einen Projektionsbereich für das Bild (53 ; 54) der allenfalls eine tolerierbare Achsabweichung aufweisenden Mündung (2) aufweist, und daß bei nicht tolerierbarer Achsabweichung wenigstens eines der Empfangselemente (40) durch das Bild (53 ; 54) der Mündung (2) beleuchtet wird.

9. Prüfvorrichtung nach einem der Ansprüche 1 bis 7, dadurch gekennzeichnet. daß für die Prüfung auf fehlerhafte Dichtfläche (7) sämtliche Empfangselemente (40) durch das Bild (55) der in der Dichtfläche (7) allenfalls tolerierbare Fehler enthaltenden Mündung (2) beleuchtet sind, während bei einem nicht tolerierbaren Fehler in der Dichtfläche (7) wenigstens eines der Empfangselemente (40) nicht beleuchtet ist.

10. Prüfvorrichtung nach einem der Ansprüche 1 bis 9, dadurch gekennzeichnet, daß jedes Empfangselement (40) über einen Vorverstärker (56) mit einem gesonderten Eingang eines Verknüpfungsglieds (57) verbunden ist, daß ein Ausgang des Verknüpfungsglieds (57) über ein UND-Glied (58) und einen Endverstärker (59) mit dem Auswerfer (60) verbunden ist, und daß ein Empfänger (63 ; 64) einer durch den jeweiligen Hohlglasgegenstand (3) dunkelzutastenden Startlichtschranke (5 ; 6) über einen Verstärker (66) und eine erste monostabile Kippschaltung (67) mit einem weiteren Eingang des UND-Glieds (58) verbunden ist, und daß ein Punkt (68) zwischen jedem Vorverstärker (56) und dem zugehörigen Eingang des Verknüpfungsglieds (57) über einen Nachverstärker (69) und gegebenenfalls über eine nachgeschaltete zweite monostabile Kippschaltung (70) mit einer Signallampe (71) verbunden ist.

11. Prüfvorrichtung nach Anspruch 10, dadurch gekennzeichnet, daß die Signallampen (71) auf einer Schautafel (72) in der gleichen Reihenfolge wie die zugehörigen Empfangselemente (40) auf einem Kreis (73) angeordnet sind.

12. Prüfvorrichtung nach Anspruch 10 oder 11, dadurch gekennzeichnet, daß bei der Taumelfehlerprüfung gemäß Anspruch 8 das Verknüpfungsglied (57) als ODER-Glied (74) ausgebildet ist.

13. Prüfvorrichung nach Anspruch 10 oder 11, dadurch gekennzeichnet, daß bei der Prüfung auf fehlerhafte Dichtfläche gemäß Anspruch 9 das Verknüpfungsglied (57) als NAND-Glied (75) ausgebildet ist.

**Claims**

1. Test device (1) for detecting unacceptable defects in a mouth (2) of hollow glass articles (3) moving along a path, in which the mouth (2) is illuminated by a light source (16) arranged above the mouth (2) and an image (53, 54, 55) of the mouth (2) is projected through an objective (31) and by way of a mirror (36) arranged above the mouth (2), transversely to an at least approximately vertical longitudinal axis (12) of the test device (1), on to a plane which is perpendicular to the projection direction (35), and in which additionally a light-sensitive receiver (37) connected by way of an electronic evaluation circuit (42) with an article ejector (60) is provided with receiving elements (40) arranged in a circle (39), characterised in that the receiving elements (40) of the light-sensitive receiver (37) are arranged in the plane perpendicular to the projection direction (35) of the mirror (36), in that the light source is formed as lamp (16) displaceable along the longitudinal axis (12) and capable of being centred in relation to this longitudinal axis, said lamp being followed by at least one collector lens (17 ; 18) and a condenser lens (19) has a central aperture (28) through which the image of the mouth (2) is projected on to the light-sensitive receiver (37) by way of the mirror (36) which is arranged between the condenser lens (19) and the collector lens (18) adjacent to the condenser lens (19).

2. Test device according to claim 1, characterised in that the objective (31) is adjustable relative to the mirror (36).

3. Test device according to claim 2, characterised in that the mirror (36) and the objective (31) are mounted in a common image tube (29).

4. Test device according to one of claims 1 to 3, characterised in that the light-sensitive receiver (37) is adjustable along the projection direction (35) relative to the mirror (36).

5. Test device according to one of claims 1 to 4, characterised in that the receiving elements (40) are arranged on a carrier plate (38) formed as a ground-glass plate.

6. Test device according to one of claims 1 to 4, characterised in that the light-sensitive receiver (37) is replaceable by a ground-glass plate (48).

7. Test device according to one of claims 3 to 6, characterised in that the image tube (29) extends through the central aperture (28) in the condenser lens (19).

8. Test device according to one of claims 1 to 7, characterised in that, for the detection of wobble faults, the light-senstive receiver (37) has, radially outside or inside the receiving elements (40), a projection zone for the image (53 ; 54) of the mouth (2) to include any tolerable deviation from the axis, and in that in the event of unacceptable deviation from the axis at least one of the receiving elements (40) is illuminated by the image (53 ; 54) of the mouth (2).

9. Test device according to one of claims 1 to 7, characterised in that, for the testing for defective sealing faces (7), all the receiving elements (40) are illuminated by the image (55) of the mouth (2) notwithstanding any tolerable faults in the sealing face (7), while in the case of an unacceptable fault in the sealing face (7) at least one of the receiving elements (40) is not illuminated.

10. Test device according to one of claims 1 to 9, characterised in that each receiving element (40) is connected by way of a pre-amplifier (56) to a separate input of a combining circuit (57), in that an output of the combining circuit (57) is connected by way of an AND gate (58) and an output amplifier (59) with the article ejector (60), and in that a receiver (63 ; 64) of a start-up light barrier (5, 6) sensing to be obscured by the respective hollow glass article (3) is connected by way of an amplifier (66) and a first monostable flip-flop (67) with a further input of the AND gate (58), and in that a point (68) between each pre-amplifier (56) and the associated input of the combining circuit (57) is connected to a signal lamp (71) by way of a post-amplifier (69) and possibly also by way of a second monostable flip-flop (70).

11. Test device according to claim 10, characterised in that the signal lamps (71) are arranged in a circle (73) on a display panel (72) in the same sequence as the associated receiving elements (40).

12. Test device according to claim 10 or 11, characterised in that in the case of the detection of wobble faults according to claim 8 the combining circuit (57) is formed as an OR gate (74).

13. Test device according to claim 10 or 11, characterised in that for the detection of defective sealing faces according to claim 9 the combining circuit (57) is formed as a NAND gate (75).

**Revendications**

1. Dispositif de vérification (1) pour la constatation de défauts non tolérables d'une embouchure (2) d'objets en verre creux (3) se mouvant le long d'une voie, dans lequel l'embouchure (2) est éclairée par une source lumineuse (16) disposée au-dessus de l'embouchure (2) et une image (53, 54, 55) de l'embouchure (2) est projetée, par un objectif (31) et par un miroir (36) disposé au-dessus de l'embouchure (2), transversalement à un axe longitudinal (12) au moins approximativement vertical du dispositif de vérification (1), sur un plan perpendiculaire à la direction de projection (35) et dans lequel, en outre, un photorécepteur (37) relié à un éjecteur (60) par l'intermédiaire d'un circuit électronique d'interprétation (42) est prévu, avec des éléments de réception (40) disposés sur un cercle, caractérisé par le fait que les éléments de réception (40) du photorécepteur (37) sont disposés dans le plan perpendiculaire à la direction de projection (35) du miroir (36) et que la source lumineuse est conçue sous forme de lampe pouvant coulisser le long de l'axe longitudinal (12) et pouvant être centrée relativement à cet axe et à la suite de laquelle sont disposées au moins une lentille de collecteur (17, 18) et une lentille de condensateur (19) et que la lentille de condensateur (19) présente une perforation centrale (28) à travers laquelle l'image de l'embouchure (2) est projetée sur un photorécepteur (37) par l'intermédiaire du miroir (36) disposé entre la lentille de condensateur (19) et la lentille de collecteur (18) voisine de la lentille de condensateur (19).

2. Dispositif de vérification selon la revendication 1, caractérisé par le fait que l'objectif (31) est réglable relativement au miroir (36).

3. Dispositif de vérification selon la revendication 2, caractérisé par le fait que le miroir (36) et l'objectif (31) sont logés dans un tube d'image commun (29).

4. Dispositif de vérification selon l'une des revendications 1 à 3, caractérisé par le fait que le photorécepteur (37) est réglable, le long de la direction de projection (35), relativement au miroir (36).

5. Dispositif de vérification selon l'une des revendications 1 à 4, caractérisé par le fait que les éléments de réception (40) sont disposés sur une plaque porteuse (38) conçue sous forme de glace dépolie.

6. Dispositif de vérification selon l'une des revendications 1 à 4, caractérisé par le fait que le photorécepteur (37) peut être remplacé par une glace dépolie (48).

7. Dispositif de vérification selon l'une des revendications 3 à 6, caractérisé par le fait que dans la perforation centrale (28) de la lentille de condensateur (19) s'étend le tube d'image (29).

8. Dispositif de vérification selon l'une des revendications 1 à 7, caractérisé par le fait que pour le contrôle de vacillement, le photorécepteur (37) présente, à l'extérieur ou à l'intérieur radialement des éléments de réception (40) une zone de projection destinée à l'image (53, 54) de l'embouchure (2) présentant tout au plus un écart tolérable d'axe, et que dans le cas d'un écart non tolérable d'axe, au moins un des éléments de réception (40) est éclairé par l'image (53, 54) de l'embouchure (2).

9. Dispositif de vérification selon l'une des revendications 1 à 7, caractérisé par le fait que pour le contrôle d'une surface d'étanchéité (7) défectueuse, tous les éléments de réception (40) sont éclairés par l'image (55) de l'embouchure (2) contenant tout au plus, dans la surface d'étanchéité (7), des défauts tolérables, tandis que dans le cas d'un défaut non tolérable dans la surface d'étanchéité (7), au moins un des éléments de réception (40) n'est pas éclairé.

10. Dispositif de vérification selon l'une des revendications 1 à 9, caractérisé par le fait que chaque élément de réception (40) est relié par l'intermédiaire d'un pré-amplificateur (56) à une entrée séparée d'un élément de combinaison (57), qu'une sortie de l'élément de combinaison (57) reliée, par l'intermédiaire d'un élément ET (58) et d'un amplificateur final (59), à l'éjecteur (60) et qu'un récepteur (63, 64) d'une barrière photoélectrique de démarrage (5, 6) à obscurcir par l'objet en verre creux (3) dont il s'agit, est relié, par l'intermédiaire d'un amplificateur (66) et d'une première bascule monostable (67), à une autre entrée de l'élément ET (58) et qu'un point (68), entre chaque préamplificateur (56) et l'entrée correspondante de l'élément de combinaison (57), est reliée, par l'intermédiaire d'un post-amplificateur (69), et éventuellement d'une deuxième bascule monostable (70) faisant suite, à une lampe témoin (71).

11. Dispositif de vérification selon la revendication 10, caractérisé par le fait que les lampes témoins (71) sont disposées sur un tableau d'observation (72) dans le même ordre que les éléments de réception (40) correspondants, sur un cercle (73).

12. Dispositif de vérification selon l'une des revendications 10 et 11, caractérisé par le fait que lors du contrôle de vacillement selon la revendication 8, l'élément de combinaison (57) est conçu sous forme d'élément OU (74).

13. Dispositif de vérification selon l'une des revendications 10 et 11, caractérisé par le fait que lors du contrôle de surface d'étanchéité défectueuse selon la revendication 9, l'élément de combinaison (57) est conçu sous forme d'élément NON ET (75).

**Fig.1**

*Fig. 2*

*Fig. 3*

*Fig. 4*

*Fig. 5*

2